# EUROPEAN PATENT SPECIFICATION

(11) **EP 0 425 317 B1**
(45) Date of publication and mention of the grant of the patent: **17.04.1996**
(21) Application number: 90311790.1
(22) Date of filing: 26.10.1990
(51) Int. Cl.: H04L 12/42

(54) **Network interface system**
Netzwerkschnittstellensystem
Système d'interface pour réseau

(30) Priority: 26.10.1989 JP 277197/89
(43) Date of publication of application: 02.05.1991
(73) Proprietor: KABUSHIKI KAISHA TOSHIBA, Kawasaki-shi, Kanagawa-ken 210, Tokyo (JP)
(72) Inventor: Ueno, Masaji, c/o Intellectual Property Div., Minato-ku, Tokyo (JP); Nishikawa, Akihito, c/o Intellectual Property Div., Minato-ku, Tokyo (JP); Iida, Shinichi, c/o Intellectual Property Div., Minato-ku, Tokyo (JP); Shiraishi, Hajime, c/o Intellectual Property Div., Minato-ku, Tokyo (JP)
(74) Representative: Freed, Arthur Woolf

(56) References cited:
- WO-A-88/01458
- US-A- 4 642 575
- US-A- 4 737 967
- PATENT ABSTRACTS OF JAPAN vol. 881, no. 222 (E-697)26 August 1988 & JP-A-63 207 246

## Description

### BACKGROUND OF THE INVENTION

### 1.Field of the Invention

This invention relates to a network interface system, in particular to those networks having different speeds for the transfer of data.

### 2.Description of the Related Art

A token ring local area network (LAN) is a data communications system connected in a one-way signal path.

As to an access means of the data communications system, There are three common types of data transmission networks which are the CSMA/CD (EThernet) for IEEE 802.3, the token bus, and the token ring. Among these three types, only the token ring has two data transfer speeds, 4 Mbps and 16 Mbps (Mega Bits Per Second). Both of the transfer speeds are frequently used, and often the data transfer speed of 4 Mbps path is used in one network while the data transfer speed of 16 Mbps path is used in another network,both of which a user may wish to access.

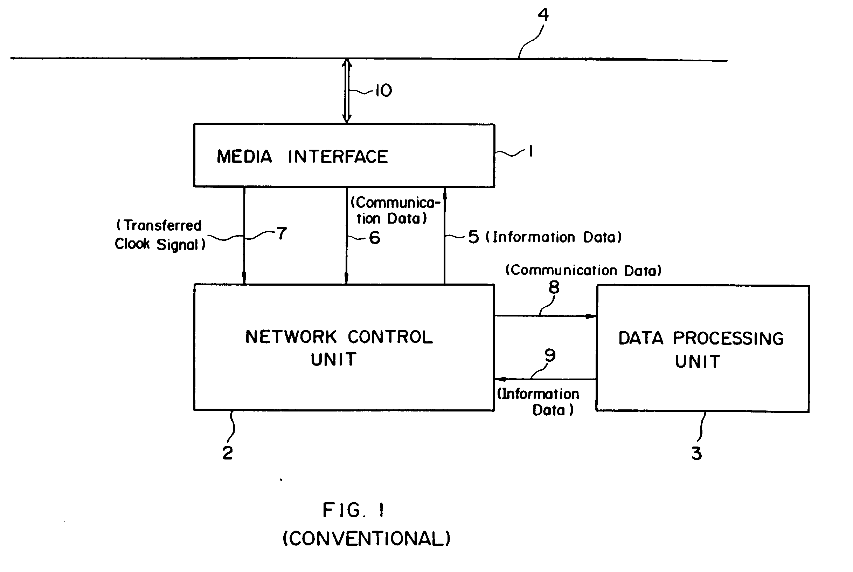

FIG.1 shows the coventional data communications system. In FIG.1, a communication interface 1 is connected to an analogue circuit. The interface 1 changes the network data transferred by network 4 into a digital signal as communication data. It concurrently generates a synchronizing clock signal 7 piled up transfer of the communication data. A network control unit 2 receives the communication data using the synchronizing clock signal 7 and the network control unit 2 transfers the communication data to the user unit, here shown as a data processing unit 3. On the other hand, information data generated by the data processing unit 3 is output to the network control unit 2. This information data is changed to an analogue output signal by the communication interface 1 in order to output it to the network 4.

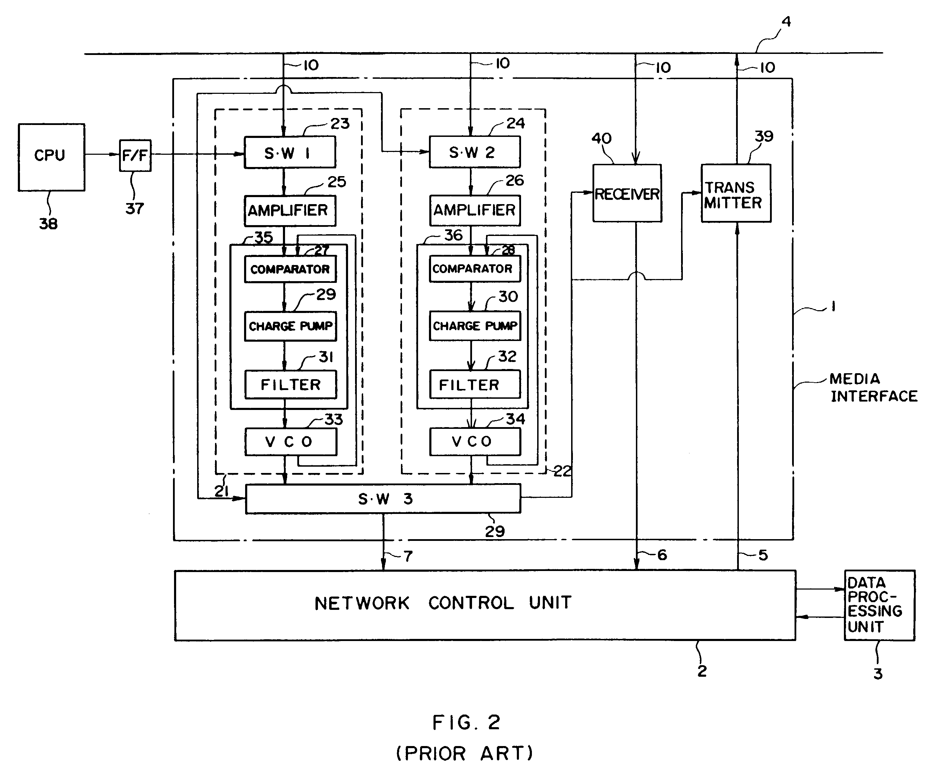

FIG.2 shows the details of the communication interface 1 shown in FIG.1. The interface 1 includes a first module 21 for 4 Mbps data transfer and a second module 22 for 16 Mbps data transfer, which respectively have a switch 23,24 for connecting to the network cable 4, an amplifier 25,26 for amplifying the communication data transferred from the network 4 through the switch 23,24, and a VCO (voltage controlled oscillator) controller 33,34. Each VCO 33, 34 has a comparater 27,28, a charge pump 29,30 and low-path filter 31,32, for adjusting the phase difference between the synchronizing clock signal and the basic clock signal output of VCO 33,34. The VCO 33,34 generates the basic clock signal in response to the output of the VCO controller 35,36. Both modules have a crystal oscillator located in the VCO 33,34. The first module 21 for 4 Mbps data transfer has a 8 MHz crystal oscillator, and the second module 22 for 16 Mbps data transfer has a 32 MHz crystal oscillator. One of the modules must be selected by the user before the data communications system is connected to the network 4 so that the data communications system is synchronized with the frequency of the communication data transferred by the network 4. It is possible to select one module by means of making either switch 23 or switch 24 conductive in response to register 37 controlled by CPU 38. The clock signal generated by the selected module is also outputted to a data transmitter 39, a data receiver 40 and the network control unit 2 by way of a switch 29.

The communication interface of such prior systems has the following drawbacks.

First, the user needs to know the speed of the transferred data from the other network stations before the data communications system is connected to other network stations.

Second, the stations must have two modules for 4 Mbps and 16 Mbpsdata transfer respectively. As a result, much space is required. In a portable computer, for example for a Lap Top Computer, this is a serious problem which results in bigger and heavier units.

Finally even if both modules are incorporated into an integrated circuit, there is no automatic selection of data transfer speed.

Patent Abstracts of Japan vol. 881, no. 222 (E-697) 26 August, 1988 and JP-A-63207246 discloses such a dual speed network, with an automatic discriminating circuit; the data speeds are detected by counting clock pulses while a transferred input signal is low, and a pulse generator forms new clock pulses at a higher frequency.

Futher, US-A-4 642 575 discloses a phase locked loop circuit which modifies the phase difference between the input signal and the local clock pulse.

Accordingly, it is an object of this invention to provide a novel network interface system which is able to connect automatically to the respective network stations having different data transfer speeds, in order to avoid the above problems. According to this invention, there is provided a network interface system as defined in Claim 1.

With the benefit of the invention, users need not select the module by themselves; the system automatically selects the module.

### BRIEF DESCRIPTION OF THE DRAWINGS

FIG.1 is a block diagram of a conventional communication station system;
FIG.2 is a block diagram of the communication interface shown in FIG.1;
FIG.3 is a block diagram illustrating a preferred embodiment of the communication interface according to the present invention;
FIG.4 is a waveform diagram for explaining a differential Manchester code.
FIG.5 is a waveform diagram for explaining the operation of the detector shown in FIG.4;
FIG.6 is a block diagram of a preferred embodiment of the detector shown in FIG.3;
FIG.7 is a circuit diagram of the selector shown in FIG.3;

### DETAILED DESCRIPTION WITH REFERENCE TO THE DRAWINGS

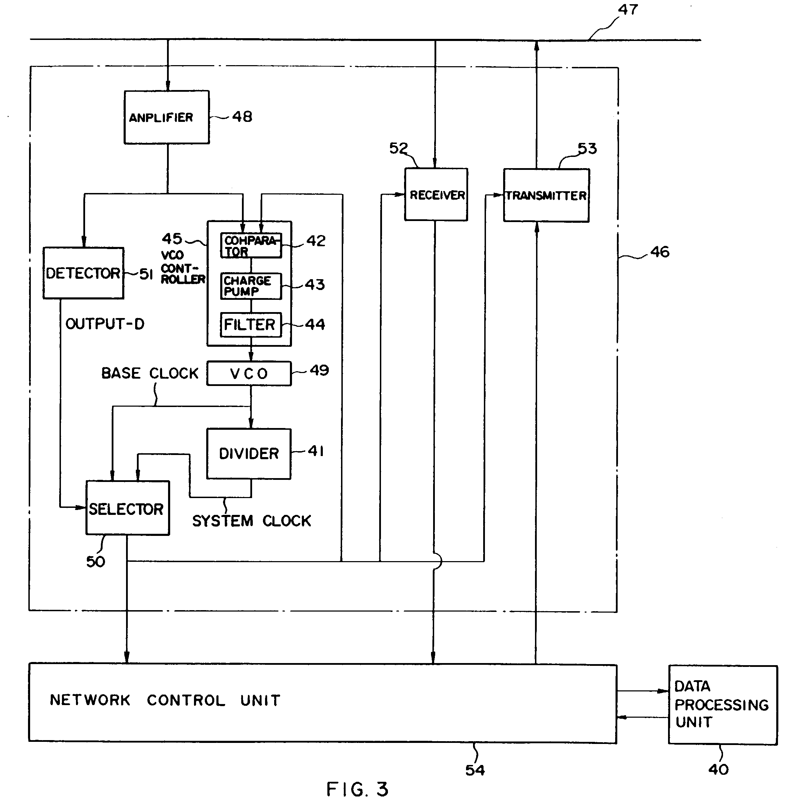

The preferred embodiment of the invention is described below with reference to the drawings. Referring to FIG.3 there is shown a block diagram illustrating one embodiment of the communication interface 46 according to the present invention.

The communication interface 46 is included in a network station connected to a token ring LAN (Local Area Network). The interface 46 includes an amplifier 48 for amplifying the communication data transferred from a network 47 to each network station , a voltage controlled oscillator (VCO) 49 for generating a basic clock signal, a frequency divider 41 for outputting a system clock signal, a selector 50 for selecting the basic clock signal or the system clock signal in response to an output signal of detector 51. Furthermore the communication interface 46 includes receiver 52 which receives communication data from the network 47 and outputs the communication data to a network control unit 54, by synchronizing a clock signal output using the selector 50. A transmitter 53 transfers an information data output by the network control unit 54 to the network 47, by synchronizing a clock signal output by using the selector 50. The network control unit 54 provides communication data to the data processing unit 40. The information data generated by the data processing unit 40 is the transmited via network control unit 54 to the transmitter 53. This network control unit 54 changes the commnication data to the information data, and outputs it to the data processing unit 40, furthermore, the unit 54 changes the information data using the clock signal of the data processing unit 40 with the clock signal selected by the selector 50. The signal is outputted to the transmitter 53. The communication data and the digital data is synchronized by the clock signal output of the selector 51.

The communication data on network 47 is provided to the detector 51 which has a data D output. The selector 50 selects either base clock signal generated by the voltage controlled oscillator 49 or the system clock signal generated by the frequency divider 41. The frequency of the clock signal output from selector 50 is 32 MHz when the data transfer speed of the network is 16 Mbps (Mega Bit Per Second). If the dividing rate of the frequency divider 41 is set at 4, the clock signal of 32 MHz is divided by 4. As a result, the system clock signal output is 8 MHz. New clock signal output of selector 50 is compared with the communication data output of amplifier 48 by comparator 42, VCO controller 45, including comparator 42 to adjust the phase difference. Comparator 42 outputs an output signal according to the phase difference between two signals. The one signal is a synchronizing clock signal generated by the amplifier 48, the other is the clock signal selected by the selector 50. The output of comparator 42 is provided as a voltage for controlling VCO 49, through a charge pump circuit 43 for charging up the output of the comparator 42 and a low-path filter 44. The alternating current output is changed to a direct current by the charge pump circuit 43 and the low-path filter 44.

On the other hand, the data transmitter 53 transfers the information data output by the data processing unit 40 to the network 47 at a data transferred speed based on the frequency selected by selector 50.

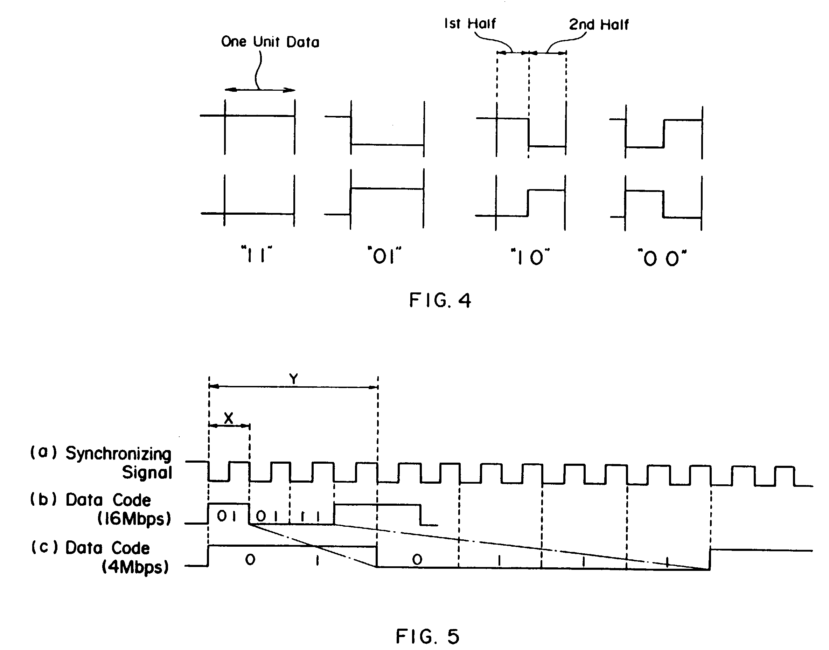

A differencial manchester code (DM code) is adopted in the token ring LAN. The format of one unit data of the DM code, as shown in FIG.4, is divided into two parts the first half and the second half. The one unit data of the transfer data is expresed as two bits. The bit data of the first half and the bit data of the second half are compared,and the DM code has four states based on the combination of invertion or non-invertion. Namely, the DM code represents "11","01","10" and "00" as the expression of binary numbers on shown in Fig. 4. Furthermore, the communication data has the SD (Start Delimiter) to determine the start of the communication data. For Example, "11 01 00 01 00 00 00" is added at the front of the communication data. As a result it is possible to prevent to recognize the data of the second half of one unit data from data of the first half of the next one unit data. FIG.5 is a timing chart showing a synchronizing signal (a) and the data codes of two data transfer signals (b),(c). The frequency of the synchronizing signal is the freqeuncy of the base clock signal generated by the VCO 49. Namely,it is 32 MHz. The data code (b),(c) used the DM Code. When the transfer speed of the communication data is 16 Mbps, the period of the data code (b) becomes twice the period of the synchronizing signal. Also, when the transfer speed of the communication data is 4 Mbps, the period of the data code (c) becomes four times the period of the synchronizing signal. The data illastrated by the data code (b) is the same the data as the data code (b). Accordingly, the amplifier 48 receives data at one of the transfer speeds. Assuming period X is the period for one unit data of 16 Mbps, the synchronizing signal (a) rises one time during period X. Assuming period Y is the period for one unit data of 4 Mbps, the synchronizing signal (a) rises four times during period Y. The ratio of X to Y is 1 to 4. Accordingly, detector 51 detects the speed of the communication data by detecting the number of times the synchronizing signal rises to "H" level signal during a certain period ( i.e. during the period of one unit data ). The selector 50 outputs a clock signal selected from the base clock signal or system clock signal in response to the output D of the detector 51. That is, the selector 50 selects and outputs the 32 MHz clock signal when the transfer speed selected by the detector 51 is 16 Mbps, and the 8 MHz clock signal when the speed is 4 Mbps. The clock signal of 32 MHz or 8 MHz is then provided to the comparator 42, and the comparator 42 compares the output of selector 50 and amplifier 48, and adjusts the phase diffrence of each signals. As described above, according to this invention, by using a network terminal which includes the communication interface system of this invention, the transfer speed of the LAN network is detected, and the speed to transfer the data to the data processing unit and to the other network is automatically determined in response to the output of the detector 51. Therefore, users need not to know the transfer speed of the LAN network in advance,and users are able to access and transfer data back and forth to a network which is operating at one of two speeds.

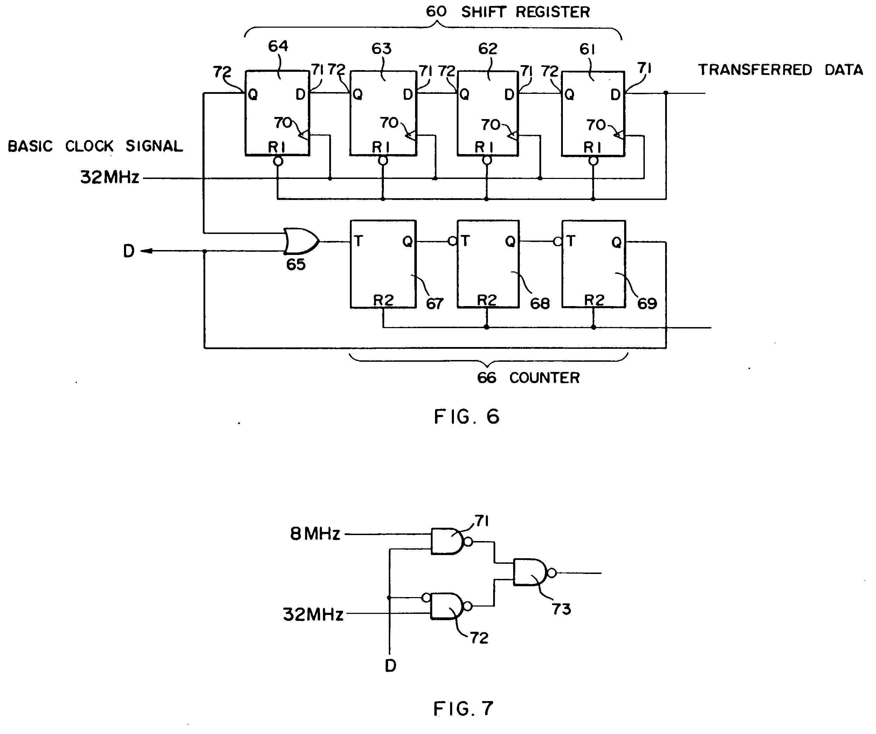

FIG. 6 shows the details of the prefered embodiment of the detection means, detector 36 for detecting the speed of the transfer speed. This circuit includes a shift register 60 consisting of four D type flip-flops 61,62,63,64 which are serially connected, an OR-gate 65 and a counter 66 consisting of three T type flip-flops 67, 68, 69 which are serially connected.

The D type flip-flops 61, 62, 63, 64 include a clock input terminal 70 to which is applied the basic clock signal ( 32MHz ) generated by the VCO 49, a first reset terminal R1 to which is applied the communication data transferred by amplifier 48 from the network, and a data input terminal D 71 and a data output terminal Q 72 which allows the transfer data to shift through the register. The output of the shift register 60 is connected to the OR-Gate 65, and the output of the OR-Gate 65 is provided to first T type flip-flop 67. The output of the third T type flip-flop 69 is connected to the OR-Gate 65 and the selector 50 as output D of the detector 51 (Fig. 3). The three T type flip-flops have a second reset terminal R2 to which a reset signal RS from an external circuit ( not shown in ) is applied.

The operator of the circuit of Fig. 6 will now be explained. The reset signal RS is applied to the several reset terminals R2 of the three T type flip-flops 67, 68, 69. Next, when the communication data provided by the amplifier 48 is a "H" level signal, the state of the its reset is removed. While the transfer data is "H", if the base clock signal rises four times to "H" level signal, the output Q of the final D type flip-flop 64 outputs a "H" level signal. When the "H" level signal is provided to the counter 66 via the OR-Gate 65, the first T type flip-flop 67 is "H" level signal. Therefore, when the first T type flip-flop 67 in the reset is the state of the reset, this flip-flop 67 outputs the "L" level signal, however, the flip-flop 67 outputs the "H" level signal because the "H" level signal provided by the OR-Gate is input. After these shifts of the register 60, the final T type flip-flop outputs a "H" level signal, and the D output stays at a "H" level signal.

In this case, it is understood that the speed of the transferred data of the LAN network being connected to the terminal is 4 Mbps. An other hand, if while the transfer data code is "H" , if the base clock signal rises up only one time, the final D type flip-flop keep to output the "L" signal because the all D type flip-flops are reset if the data code changes "H" to "L" while the base clock signal rises up four times. In this case, it is understood that the speed of the transferred data of the LAN network being connected to the terminal is 16 Mbps. Also, this system defaults to 16 Mbps if the station is not connected to any networks yet.

Furthermore, according to the structuer, the counter 66 counts up the output of shift register 60 several times for the purpose of preventing a missed operation.

FIG. 7 shows a preferred embodiment of a selector circuit. The selector circuit 50 includes a first NAND-Gate 71 which receives the divided base clock signal D of the detector 51 at the second terminal. A second NAND-Gate 72has a first terminal connected to VCO 49 inverted output signal D applied to a second terminal. A third NAND-Gate 73 received the output of the first and second NAND-Gates. The system clock signal (8 MHz) is output when the output signal D is "H", and when the output signal D is "L", the base clock signal (32 MHz) is output by the circuit. As described above, with this invention, the communicated interface system can provide a terminal which autmatically connects to any network having one of two data transfer speeds. Vavious modifications and vaviations could be made to the invention without departing from the scope of the invention.

## Claims

1. Network interface system connected to a network for transferring signal data synchronized with a first clock signal of a first frequency or a second clock signal of a second frequency to the user unit characterized by comprising
means for amplifying (48) the signal data transferred from the network cable (47);
a detection means (51) connected to the amplifying means (48) for outputting a first signal when frequency of the transferred signal data is the first frequency, a second signal when the frequency of the transferred signal data is the second frequency;
a voltage controlled oscillator (VCO) (49) for generating a basic clock signal at the first frequency;
means for dividing (41) the basic clock signal frequency for outputting a system clock signal;
means for selecting (50) one of either the base clock signal output from the voltage controlled oscillator (49) and the system clock signal output by the frequency divider (41) in response to the output signal of said detector means (51) as an output from said selecting means (50), and
phase control means (45) for outputting a voltage according to the phase difference to the VCO (49) for modifying phase shift between the amplified signal data and the clock signal output from the selecting means (50).

2. A network interface system according to claim 1 characterized in that said detector means comprises a shift. register (60) and a counter (66).

3. The network interface system of claim 1 further characterized by comprising a network controller (54) for receiving the signal data transferred from the network and for transmitting to the network cable synchronizing with the clock signal selected by the selector (50), and
a data processing unit (40) connected to the network controller (54) for processing the signal data.

4. A network interface system according to claim 1 characterized in that the detector means (51) comprises first means (60) for detecting the number of pulse of the basic clock signal in a period from a rising adge to the next falling edge of the signal data being transferred from the network and second means (66) for counting said pulses and said detector means (51) outputs a first or a second detector signal determined by the number of pulse of the basic clock signal occurring in the period.

5. The network interface,system of claim 1 further characterized by comprising a network controller (54):
a data processing user unit (40) connected to the network controller (54) for processing signal data from said controller (54) and outputting information data to said controller (54):
wherein said network controller (54) receives signal data transferred from the network and transmits information data from said user unit (40) to said network synchronized in accordance with the clock signal selected by said selector (50).

## Patentansprüche

1. Netzwerkschnittstellersystem, das mit einem Netzwerk verbunden ist, zum Übermitteln von Signaldater, die mit einem ersten Taktsignal einer ersten Frequenz oder einem zweiten Taktsignal einer zweiten Frequenz synchronisiert sind, an die Anwendereinheit, gekennzeichnet durch:
eine Einrichtung zum Verstärken (48) der Signaldaten, die vom Netzwerkkabel (47) übermittelt werden;
eine Ermittlungseinrichtung (51), die mit der Verstärkungseinrichtung (48) verbunden ist, zum Ausgeben eines erster Signals, wenn die Frequenz der übermittelten Signaldaten die erste Frequenz ist, eines zweiten Signals, wenn die Frequenz der übermittelten Signaldaten die zweite Frequenz ist;
einen spannungsgesteuerten Oszillator (VCO) (49) zum Erzeugen eines Haupttaktsignals mit der ersten Frequenz;
eine Einrichtung zum Teilen (41) der Haupttaktsignalfrequenz zum Ausgeben eines Systemtaktsignals;
eine Einrichtung zum Wählen (50) entweder des Haupttaktsignals, das vom spannungsgesteuerten Oszillator (49) ausgegeben wird, oder des Systemtaktsignals, das vom Frequenzteiler (41) ausgegeben wird, als Ausgangssignal der Wähleinrichtung (50) als Antwort auf das Ausgangssignal der Detektoreinrichtung (51); und
eine Phasensteuereinrichtung (45) zum Ausgeben einer Spannung entsprechend der Phasendifferenz an den VCO (49) zum Modifizieren einer Phasenverschiebung zwischen den verstärkten Signaldaten und dem Taktsignal, das von der Wähleinrichtung (50) ausgegeben wird.

2. Netzwerkschnittstellensystem nach Anspruch 1, dadurch gekennzeichnet, daß die Detektoreinrichtung ein Schieberegister (60) und einen Zähler (66) aufweist.

3. Netzwerkschnittstellensystem nach Anspruch 1, ferner gekennzeichnet durch eine Netzwerksteuereinrichtung (54) zum Empfangen der Signaldaten, die vom Netzwerk übermittelt werden, und zur Übertragen an das Netzwerkkabel synchron mit dem Taktsignal, das vom Selektor (50) gewählt wird, und
eine Datenverarbeitungseinheit (40), die mit der Netzwerksteuereinrichtung (54) verbunden ist, zum Verarbeiten der Signaldaten.

4. Netzwerkschnittstellensystem nach Anspruch 1, dadurch gekennzeichnet, daß die Detektoreinrichtung (51) aufweist eine erste Einrichtung (60) zum Ermitteln der Impulsanzahl des Haupttaktsignals in einer Periode von einer Anstiegsflanke bis zur nächsten Abfallflanke der Signaldaten, die vom Netz übermittelt werden, und eine zweite Einrichtung (66) zum Zählen der Impulse, und daß die Detektoreinrichtung (51) ein erstes oder ein zweites Detektorsignal ausgibt, das von der Impulsanzahl des Haupttaktsignals, das in der Periode auftritt, bestimmt wird.

5. Netzwerkschnittstellensystem nach Anspruch 1, ferner gekennzeichnet durch einen Netzwerksteuereinrichtung (54);
eine Daterverarbeitungsanwendereinheit (40), die mit einer Netzwerksteuereinrichtung (54) verbunden ist, zum Verarbeiten von Signaldaten von der Steuereinrichtung (54) und zum Ausgeben von Informationsdaten an die Steuereinrichtung (54);
wobei die Netzwerksteuereinrichtung (54) Signaldaten empfängt, die vom Netzwerk übermittelt werden, und Informationsdaten von der Anwendereinheit (40) an das Netzwerk überträgt, das entsprechend dem Taktsignal synchronisiert wird, das vom Selektor (50) gewählt wird.

## Revendications

1. Système d'interface de réseau connecté à un réseau pour transmettre vers l'unité utilisatrice des données de signal synchronisées avec un premier signal d'horloge d'une première fréquence, ou un second signal d'horloge d'une seconde fréquence, caractérisé en ce qu'il comprend:
des moyens (48) pour amplifier les données de signal qui sont transmises à partir du câble du réseau (47);
des moyens de détection (51) connectés aux moyens d'amplification (48) pour émettre un premier signal lorsque la fréquence des données de signal transmises est la première fréquence, et un second signal lorsque la fréquence des données de signal transmises est la seconde fréquence:
un oscillateur commandé par tension (ou VCO) (49) pour générer un signal d'horloge de base à la première fréquence;
des moyens (41) pour diviser la fréquence du signal d'horloge de base de façon à émettre un signal d'horloge de système:
des moyens (50) pour sélectionner, à titre de signal de sortie des moyens de sélection (50), en réponse au signal de sortie des moyens détecteurs (51), un signal parmi le signal d'horloge de base qui est émis par l'oscillateur commandé par tension (49) et le signal d'horloge de système qui est émis par le diviseur de fréquence (41); et
des moyens de commande de phase (45) pour émettre vers le VCO (49) une tension correspondant à la différence de phase, afin de modifier le déphasage entre les données de signal amplifiées et le signal d'horloge qui est émis par les moyens de sélection (50).

2. Système d'interface de réseau selon la revendication 1, caractérisé en ce que les moyens détecteurs comprernent un registre à décalage (60) et un compteur (66).

3. Système d'interface de réseau de la revendication 1, caractérisé en outre en ce qu'il comprend un contrôleur de réseau (54) qui est destiné à recevoir les données de signal transmises à partir de ce réseau, et à émettre vers le câble du réseau en synchronisme avec le signal d'horloge sélectionné par le sélecteur (50), et
une unité de traitement de données (40), connectée au contrôleur de réseau (54) pour traiter les données de signal.

4. Système d'interface de réseau selon la revendication 1, caractérisé en ce que les moyens détecteurs (51) comprennent des premiers moyens (60) pour détecter le nombre d'impulsions du signal d'horloge de base dans une période allant d'un front montant jusqu'au front descendant suivant des données de signal qui sont transmises à partir du réseau, et des seconds moyens (66) pour compter ces impulsions, et les moyens détecteurs (51) émettent un premier ou un second signal de détection qui est déterminé par le nombre d'impulsions du signal d'horloge de base apparaissant dans la période.

5. Système d'interface de réseau de la revendication 1, caractérisé en outre en ce qu'il comprend un contrôleur de réseau (54) : et
une unité de traitement de données d'utilisateur (40) connectée au contrôleur de réseau (54) pour traiter des données de signal provenant du contrôleur (54) et pour émettre des données d'information vers le contrôleur (54);
dans lequel le contrôleur de réseau (54) reçoit des données de signal qui sont transmises à partir du réseau et il émet des données d'information à partir de l'unité d'utilisateur (40) vers le réseau, en synchronisme avec le signal d'horloge qui est sélectionné par le sélecteur (50).
